# EUROPÄISCHE PATENTSCHRIFT

(11) **EP 1 861 663 B1**
(45) Veröffentlichungstag und Bekanntmachung des Hinweises auf die Patenterteilung: **24.08.2011**
(21) Anmeldenummer: 06723606.7
(22) Anmeldetag: 21.03.2006
(51) Int. Cl.: F25B 29/00, F25B 27/00, F28D 20/02

(54) **LATENTWÄRMESPEICHER FÜR EFFIZIENTE KÜHL- UND HEIZSYSTEME**
LATENT HEAT STORAGE FOR EFFICIENT COOLING AND HEATING SYSTEMS
ACCUMULATEUR DE CHALEUR LATENTE POUR SYSTEMES DE REFROIDISSEMENT ET DE CHAUFFAGE PERFORMANTS

(30) Priorität: 21.03.2005 DE 102005013012
(43) Veröffentlichungstag der Anmeldung: 05.12.2007
(73) Patentinhaber: ZAE Bayern Bayerisches Zentrum für angewandte Energieforschung e.V., 85748 Garching (DE)
(72) Erfinder: MEHLING, Harald, 80802 München (DE); SCHWEIGLER, Christian, 82178 Puchheim (DE)
(74) Vertreter: Winter, Brandl, Fürniss, Hübner, Röss, Kaiser, Polte - Partnerschaft
(86) Internationale Anmeldenummer: PCT/EP2006/002606
(87) Internationale Veröffentlichungsnummer: WO 2006/100047

(56) Entgegenhaltungen:
- WO-A-96/00370
- DE-A1- 3 233 649
- US-A- 4 169 554
- US-A- 4 205 529
- US-A- 5 507 337

## Beschreibung

Solarthermische Systeme werden dem Stand der Technik entsprechend vorwiegend eingesetzt, um Solarstrahlung in nutzbare Wärme für unterschiedliche Anwendungen - beispielsweise Brauchwassererwärmung, Gebäudeheizung oder industrielle Prozesse - zu verwandeln. Zur Wärmegewinnung finden unterschiedliche Arten von Solarkollektoren Verwendung. Zum Zweck des zeitlichen Ausgleich von Wärmeerzeugung und Wärmeverbrauch werden Wärmespeicher eingesetzt. Üblicherweise werden Warmwasserspeicher, gefüllt mit Heizkreiswasser oder Brauchwasser, eingesetzt. Dabei beruht der Speichereffekt auf der Speicherung sensibler Wärme, die zur Beladung bzw. Entladung des Speichers zu- bzw. abzuführen ist. Dies ist mit einer entsprechenden Temperaturänderung des Speichers verbunden.

Eine weiterer Anwendungsfall besteht in der Nutzung solarthermisch erzeugter Wärme zum Antrieb von thermisch angetriebenen Kälteanlagen - sogenannten Sorptionskälteanlagen. Gerade bei groß dimensionierten Solaranlagen, die über die Brauchwassererwärmung hinaus auch zur Unterstützung der Gebäudeheizung eingesetzt werden, werden außerhalb der Heizperiode große Wärmemengen verfügbar, die nicht zu Heizzwecken benötigt werden. Hier bietet sich der Einsatz von Sorptionskälteanlagen zur Bereitstellung von Klimakälte unter Ausnutzung der erzeugten Solarwärme an. Zur Bereitstellung von Antreibswärme für die Kälteerzeugung während Zeiten unzureichendem Solarwärmeertrags kann zusätzlich Antriebswärme mittels eines Heizkessels zur Verfügung gestellt werden.

Als Sorptionskälteanlagen können sowohl Anlagen mit flüssigem Sorptionsmittel - sogenannte Absorptionskälteanlagen - oder Anlagen mit festem Sorptionsmittel - sogenannte Adsorptionskälteanlagen - eingesetzt werden. In jedem Fall wird zur Erzeugung des gewünschten Kühleffekts - beispielsweise bereitgestellt mittels eines Kaltwasserkreislaufs mit Temperaturen im Bereich von etwa 5°C bis maximal etwa 18°C - Antriebswärme von wenigstens etwa 60°C benötigt. Die Funktion dieser Anlagen erfordert zwingend eine Abfuhr von Abwärme an die Umgebung bei einem mittleren Temperatumiveau von etwa 25 bis 40°C. Die anfallende Abwärmeleistung entspricht etwa der Summe der erzeugten Kälteleistung und der aufgenommenen Antriebswärmeleistung. Für die Abgabe dieser Abwärme an die Umgebung werden normalerweise Naßkühltürme in offener oder geschlossener Bauart, trockene Rückkühler oder Hybridkühltürme verwendet. Der Betrieb des Rückkühlwerkes ist in jedem Fall mit einem erheblichen Aufwand hinsichtlich Wasserverbrauch und Hilfsenergiebedarf für die Ventilation des Rückkühlwerk sowie für die Umwälzung des Kühlwasser verbunden, welches als Wärmeträger zwischen Kälteanlage und Rückkühlwerk dient. Eine Erhöhung des Temperaturniveaus der Abwärmeabgabe - beispielsweise bei heißen Umgebungstemperaturen - resultiert in einem Anstieg der für den Antrieb der Sorptionskälteanlage erforderlichen Antriebstemperatur. Dies ist wiederum mit einem Rückgang des Wirkungsgrades des Solarkollektors verbunden und führt so zu einer Einbuße an Solarwärmeleistung und folglich auch der verfügbaren Kälteleistung. In Systemen zur solaren Kühlung kommen oftmals Wärme- und / oder Kältespeicher zur zeitlichen Pufferung der solar erzeugten Antriebswärme bzw. der erzeugten Kälte zum Einsatz.

Aus der DE 32 33 640 A1 ist ein kombiniertes Kühl/Heiz-System mit einer Absorptionskältemaschine/Wärmepumpe bekannt. Die Absorptionskältemaschine/Wärmepumpe stellt Nutzkälte auf einem unteren Temperaturniveau und Nutzwärme auf einem mittleren Temperatumiveau bereit. Über einen Umgebungswärmetauscher wird Abwärme an die Umgebung abgegeben. Die Absorptionskältemaschine dient als Heizquelle für den Heizbetrieb. Es ist auch ein Latentwärmespeicher vorgesehen, der jedoch im Enteisungsbetrieb gespeicherte Wärme an das Kühlmittel abgibt.

Aus der US 5 507 337 A bzw. der WO96/00370 A ist ebenfalls ein kombiniertes Kühl/Heinz-System mit Latentwärmespeichern bekannt. Im Heizbetrieb wird Überkapazität an Heizwärme in den Latentspeicher eingespeichert und bei Bedarf wird der Latentspeicher zeitversetzt mit der Einrichtung zur Übertragung von Heizwärme an den Verbraucher verbunden. Im Kühlbetrieb wird "Kälte" über Nacht im Latentwärmespeicher eingespeichert und diese Kälte wird zeitversetzt bei Bedarf tagsüber vom Latentspeicher zur Einrichtung zur Übertragung von Nutzkälte übertragen.

Es ist Aufgabe der vorliegenden Erfindung ein kombiniertes Kühl/Heiz-System anzugeben, dessen Wirkungsgrad durch wechselnde Umgebungsbedingungen weniger beeinflusst wird.

Die Lösung dieser Aufgabe erfolgt durch ein kombiniertes Kühl/Heiz-System gemäß Anspruch 1.

Gegenstand der hier vorgelegten Erfindung ist die Verwendung eines Latentwärmespeichers (synonyme Bezeichnung: PCM-Speicher, engl.: phase change material für Phasenwechselmaterial) zur Aufnahme der von der Kälteanlage während des Kühlbetriebs abgegebenen Abwärme. Auf diese Weise kann ein definiertes niedriges Temperaturniveau für die Rückkühlung der Kälteanlage - unabhängig von der während des Betriebs der Kälteanlage herrschenden Umgebungstemperaturen - angeboten werden. Das Temperaturniveau der Rückkühlung wird durch die Umwandlungstemperatur des Latentwärmespeichers festgelegt. Bei dieser Temperatur findet ein Phasenwechsel des Speichermaterials statt. Der Speichereffekt beruht auf der Aufnahme bzw. Abgabe latenter Wärme während des Wechsels des Aggregatzustands. Auf diese Weise ist es sogar möglich, die Kälteanlage mit niedrigeren Rückkühltemperaturen als im Fall des Einsatzes eines konventionellen Rückkühlwerkes zu betreiben. Damit kann die Solarkollektortemperatur gesenkt werden, wodurch die Effizienz des Systems - d.h. der Kälteertrag pro Kollektorfläche der Solarkollektoranlage - steigt. Die Verwendung eines Latentwärmespeichers beinhaltet gegenüber der Speicherung sensibler Wärme den entscheidenden Vorteil, dass der Speicher während des gesamten Beladungsvorgangs annähernd bei konstanter Temperatur betrieben werden kann. Speicherung sensibler Wärme würde - unter der Annahme eines wirtschaftlich vertretbaren Volumens des Speichers - eine deutliche Erhöhung der Temperatur der Abwärmeabgabe der Kältemaschine mit zunehmender Beladung des Wärmespeichers bewirken. Dies würde zu einer deutlichen Einschränkung der Funktionsfähigkeit des Systems - in erster Linie zu einem Rückgang der zur Verfügung stehenden Kälteleistung - führen.

Die vom Latentwärmespeicher während des Betriebs der Kälteanlage aufgenommene Wärme wird während der Nachtstunden über ein Rückkühlwerk an die Umgebung abgegeben. Auf diese Weise können die während der Nachstunden herrschenden niedrigeren Umgebungstemperaturen für die Abgabe der Abwärme der Kälteerzeugung an die Umgebung genutzt werden. Zudem wird verglichen mit der Beladungsdauer des Wärmespeichers während der Kälteerzeugung in der Regel ein längerer Zeitraum für die Entladung des Wärmespeichers zur Verfügung stehen, so dass die Entladung mit kleinerer Leistung und somit vergleichsweise geringer treibender Temperaturdifferenz erfolgen kann.

Zur Rückkühlung, d.h. als Wärmesenke für die Übertragung der Abwärme an die Umgebung, können die oben genannten Kühlturmarten oder eine Grundwasser-Brunnenanlage, ein Aquifer, ein Erdkollektor oder eine Erdsondenanlage eingesetzt werden. Im Fall der solaren Klimatisierung kann der Latentwärmespeicher zudem während der Nachtstunden sehr effizient durch Wärmeabgabe - vornehmlich mittels Wärmeabstrahlung - über die Solarkollektoranlage entladen werden. Insgesamt können verschiedene Wärmesenken gleichzeitig oder zeitlich versetzt zur Entladung des Wärmespeichers genutzt werden.

Das Rückkühlwerk kann während des Betriebs der Kälteanlage zur Unterstützung des Latentwärmespeichers eingesetzt werden; d.h. ein Teil der Abwärme der Kälteanlage kann sofort an die Umgebung abgeführt werden.

In Systemen, bei denen solarthermische Wärme sowohl zum Antrieb einer Sorptionskälteanlage als auch zu Heizzwecken verwendet wird, kann der Latentwärmespeicher neben der oben beschriebenen Verwendung zur Rückkühlung der Kälteanlage auch zur Pufferung der solarthermisch erzeugten Heizwärme während der Heizperiode eingesetzt werden. Durch diese saisonal wechselnde Doppelnutzung ergibt sich ein besonders wirtschaftlicher Einsatz des Latentwärmespeichers.

Entsprechend der Wahl der Umwandlungstemperatur des Phasenwechselmaterials zur Aufnahme der Abwärme der Kälteanlage bei Temperaturen um etwa 30°C eignet sich das hier beschriebene System in erster Linie für Niedertemperaturheizsysteme mit Heizkreistemperaturen unterhalb der gewählten Umwandlungstemperatur. Dies trifft vor allem auf Flächenheizsysteme, wie Wand- und Fußbodenheizungen, oder Installationen zur Betonkemaktivierung zu. Diese Systeme können während der Kühlperiode auch zur Kühlung des Verbrauchers - typischerweise eines Gebäudes - eingesetzt werden.

Genauso wie bei der Rückkühlung der Kälteanlage hat auch im Heizbetrieb die Speicherung der Wärme auf einem definierten niedrigen Temperatumiveau - festgelegt durch die Umwandlungstemperatur des Latenwärmespeichermateriäls - einen positiven Effekt auf die Betriebsweise des Gesamtsystems. Durch die Speicherung der solarthermisch erzeugten Wärme bei niedriger Speichertemperatur kann das Solarkollektorsystem unabhängig vom Ladezustand des Speichers immer mit niedriger Wärmeträgertemperatur von maximal etwa 40°C betrieben werden. Dadurch kann das Kollektorsystem mit deutlich höherem Wirkungsgrad im vergleich zum Betrieb mit höherer Betriebstemperatur von normalerweise etwa 60 bis 80°C betrieben werden.

Neben der Einspeisung von Niedertemperatursolarwärme in das Heizungssystem kann zusätzlich auch Wärme aus einem Heizkessel in das Helzungssystem eingespeist werden.

Im Solar-Heizbetrieb - d.h. wenn der Latentwärmespeicher zur zeitlichen Pufferung der solarthermisch erzeugten Wärme eingesetzt wird - kann zusätzlich die während der Kühlperiode eingesetzte Kälteanlage als Wärmepumpe zur Bereitstellung von Niedertemperaturheizwärme eingesetzt werden. Das während der Kühlperiode eingesetzte Rückkühlwerk oder andere Systeme können hierzu zur Gewinnung von Umgebungswärme, die mittels Wärmepumpe auf Heiztemperatumiveau angehoben wird, eingesetzt werden. Hierfür eignen sich neben den verschiedenen Kühlturmarten vor allem Grundwasser-Brunnenanlagen, Erdsonden, Erdkollektoren und Luft-Sole-Wärmetauscher.

Neben der hier beschriebenen Konstellation eines Systems mit Sorptionskälteanlage ist die Erfindung ebenso anwendbar für Systeme mit mechanischer Kälteerzeugung; d.h. Kompressionskältemaschine. Auch in diesem Fall kann der Latentwärmespeicher sowohl zur Aufnahme der Abwärme der Kälteanlage und zeitversetzter Abgabe der Abwärme an die Umgebung als auch zur Pufferung von Niedertemperaturheizwärme für den Heizbetrieb eingesetzt werden. Auch hier ist im saisonalen oder tageszeitlichen Wechsel die Verwendung der Kälteanlage als Wärmepumpe zur Bereitstellung von Heizwärme möglich.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung bevorzugter Ausführungsformen anhand der Zeichnung. Es zeigt
- Fig. 1: eine schematische Darstellung einer beispielhaften Ausführungsform der Erfindung,
- Fig. 2: den Kühlbetrieb (Tagbetrieb) der beispielhaften Ausführungsform, während dem die Abwärme der Kältemaschine mittels Latentwärmespeicher (PCM- Speicher) zwischengespeichert wird,
- Fig. 3: den Kühlbetrieb (Tagbetrieb) der beispielhaften Ausführungsform, während dem seriell zum Latentwärmespeicher ein Rückkühler eingesetzt wird,
- Fig. 4: den Kühlbetrieb (Tagbetrieb) der beispielhaften Ausführungsform, während dem parallel zum Latentwärmespeicher ein Rückkühler eingesetzt wird,
- Fig. 5.: den Kühlbetriebes (Nachtbetrieb) der beispielhaften Ausführungsform, während der Latentwärmespeicher durch den Rückkühler entladen wird,
- Fig. 6: den Solar-Heizbetrieb, bei dem die solar erzeugte Heizwärme zeitlich mittels Latentwärmespeicher gepuffert wird, und
- Fig. 7: den Solar-Heizbetrieb, bei dem die solar erzeugte Heizwärme zeitlich mittels Latentwärmespeicher gepuffert wird und zusätzlich der Heizbetrieb durch eine Absorptionswärmepumpe unterstützt wird.

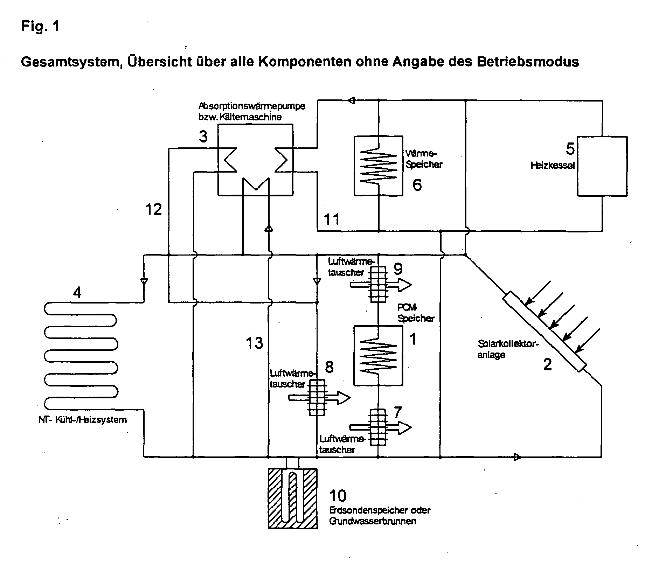

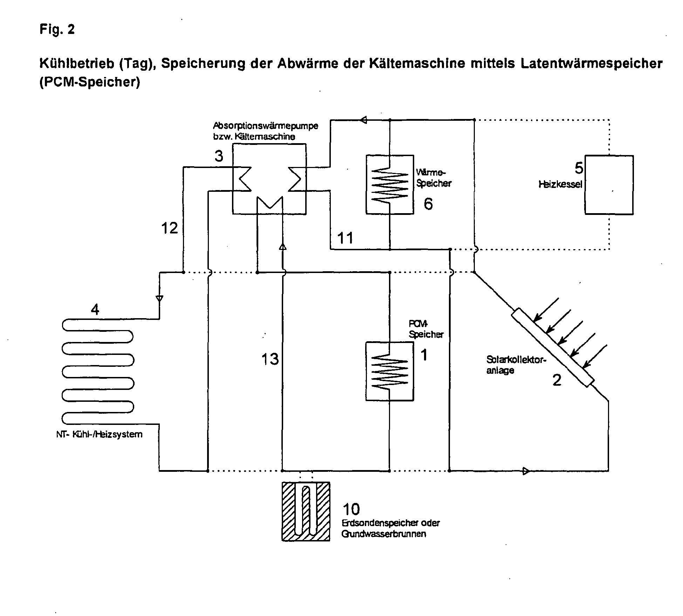

Fig. 1 zeigt ein Beispiel für das oben beschriebene System zum saisonal wechselnden Einsatz zur solaren Kühlung und zur Heizungsunterstützung unter Verwendung eines Latentwärmespeichers 1. Die Zeichnung zeigt nur die prinzipielle Verschaltung ohne Angabe der exakten anlagentechnischen Ausführung. In den Fig. 2 bis 7 ist die Betriebsweise des beispielhaften Systems in den verschiedenen Betriebszuständen dargestellt:

Fig. gibt einen Überblick über die verschiedenen Anlagenkomponenten: Latentwärmespeicher 1, Solarkollektoranlage 2, Absorptionswärmepumpe bzw. Kältemaschine 3, NT(Niedertemperatur)-Kühl-/Heizsystem 4, Heizkessel 5, Wärmespeicher 6, Luftwärmetauscher 7 bis 9, Erdsondenanlage/-speicher oder Grundwasserbrunnen 10.

Fig. 2 zeigt das System im Kühlbetrieb, d.h. vorzugsweise tagsüber. Die Solarkollektoranlage 2 liefert über einen Heizkreislauf 11 die Antriebswärme an die Antriebsseite der Kältemaschine 3. Ein Wärmespeicher 6 kann zur Vergleichmäßigung dieser Wärmelieferung zwischen Solarkollektoranlage 2 und Kältemaschine 3 eingebunden werden. Die kalte Seite der Kältemaschine 3 ist über einen Kältekreislauf 12 mit dem NT(Niedertemperatur)-Kühl-/Heizsystem 4 verbunden und liefert so nutzbare Kälte zur Kühlung des Raums. Die Abwärmeseite der Kältemaschine 3 ist über einen Kühlkreislauf 13 mit dem Latentwärmespeicher (PCM-Speicher) 1 verbunden. Dieser Latentwärmespeicher speichert die von Kältemaschine abgegebene Abwärme. Als Optionen können ein Heizkessel 5 zur zusätzlichen Bereitstellung von Antriebswärme sowie eine Erdsonden- oder Brunnenanlage 10 zur zusätzlichen Abfuhr von Abwärme der Kältemaschine 3 eingesetzt werden.

Die Figuren 2 bis 4 zeigen den Betrieb des Systems im Kühlmodus, d.h. zur Bereitstellung von Kälteenergie mittels solarthermisch angetriebener Absorptionskältemaschine und zeitlicher Pufferung der Abwärmeabgabe der Kältemaschine mittels Latentwärmespeicher (PCM-Speicher). Die Rückkühlung wird in den dargestellten Varianten jeweils durch ein Rückkühlwerk, welches an unterschiedlichen Positionen eingesetzt werden kann, unterstützt. Anstelle des Rückkühlwerkes könnte auch eine Wärmeabgabe an den Untergrund mittels Erdsonden, Erdkollektor oder Grundwasserkopplung erfolgen.

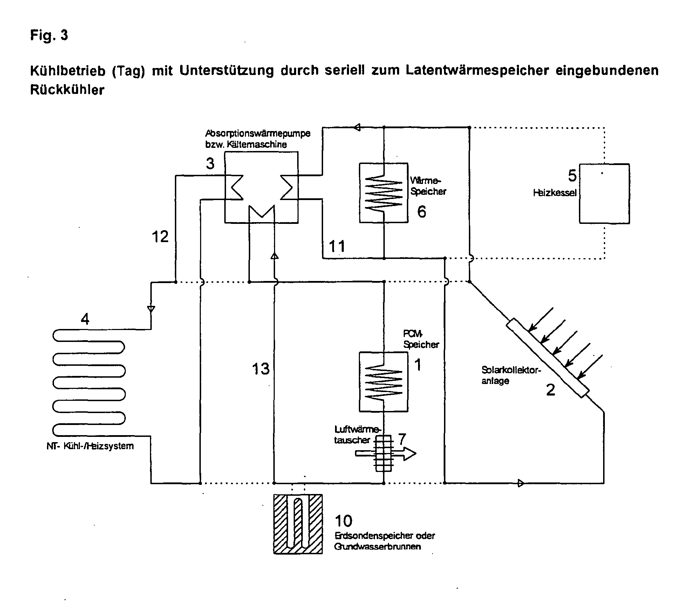

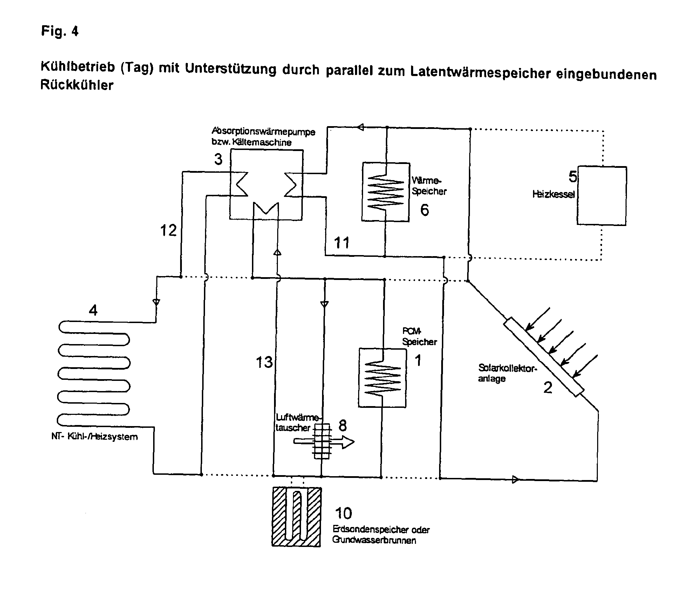

Die Figuren 3 und 4 zeigen wie Fig. 2 das System im Kühlbetrieb, d.h. vorzugsweise tagsüber, hier jedoch mit einem zusätzlichen Luftwärmetauscher zur Unterstützung der Abfuhr der Abwärme der Kältemaschine 3 an die Umgebung. Der Luftwärmetauscher 3 kann in Serie - siehe Fig. 3 - oder parallel - siehe Fig. 4 - zum Latentwärmespeicher 1 in den Kühlkreislauf 13 eingebunden werden. Bei serieller Einbindung ist es im Hinblick auf einen Betrieb der Kälteanlage 3 mit möglichst niedriger Rückkühltemperatur vorteilhaft, das von der Kältemaschine 3 kommende Kühlwasser zuerst durch den Luftwärmetauscher 9 (siehe Fig. 1) zu führen und anschließend durch den Latentwärmespeicher 1.

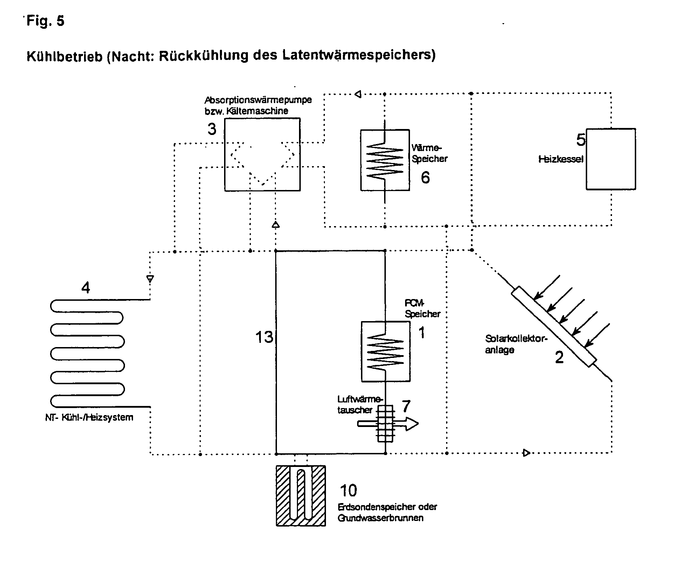

Fig. 5 zeigt die Rückkühlung des Latentwärmespeichers 1 im Nachtbetrieb. Die Rückkühlung erfolgt über den Luftwärmetauscher 7, der über den Rückkühlkreis 13 der Kältemaschine 3 mit dem Latentwärmespeicher verbunden ist. Für diesen Rückkühlbetrieb bei Stillstand der Kältemaschine 3 kann die Leitungsführung des Rückkühlkreises 13 so umgeschaltet werden, dass die Kältemaschine nicht mehr von Kühlwasser (Sole) durchströmt wird.

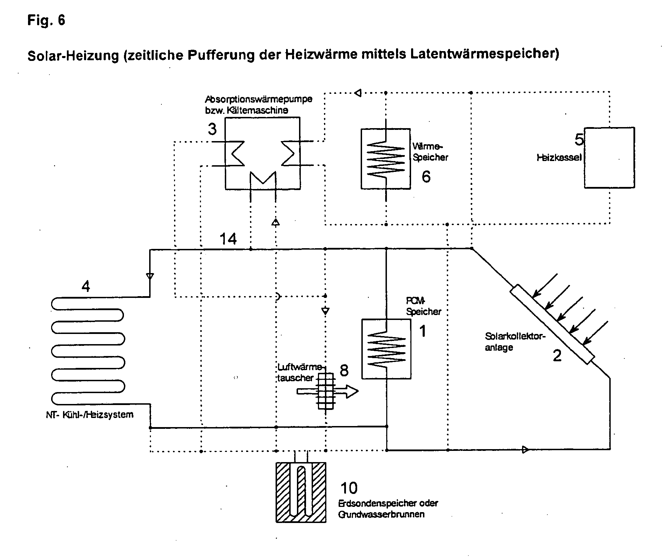

Fig. 6 zeigt den Solar-Heizbetrieb mit zeitlicher Pufferung der Solarwärme mittels Latentwärmespeicher 1: Die Solarkollektoranlage 2 ist über den Heizkreislauf mit dem NT(Niedertemperatur)-Kühl-/Heizsystem 4 und gleichzeitig mit dem Latentwärmespeicher 1 verbunden. Überschüssige Heizwärme, die nicht über den Heizkreis 14 an das NT(Niedertemperatur)-Kühl-/Heizsystem 4 geliefert wird, nimmt der Latentwärmespeicher 1 auf.

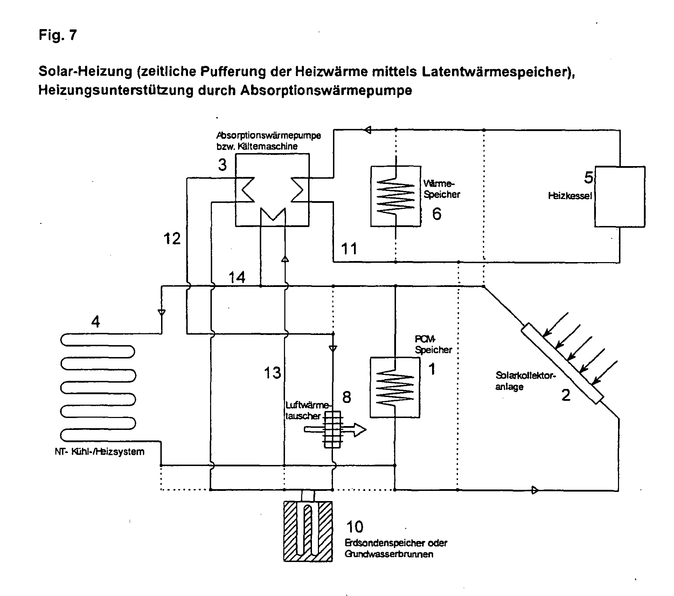

Fig. 7 zeigt den Solar-Heizbetrieb mit zeitlicher Pufferung der Solarwärme mittels Latentwärmespeicher, wie in Fig. 6 dargestellt, mit zusätzlichem Einsatz einer thermisch angetriebenen Wärmepumpe 3 zur Unterstützung des Heizbetriebs. Die Nutzwärmeabgabe der Wärmepumpe 3 erfolgt über den gegenüber dem Kältebetrieb (siehe Fig. 2) umgeschalteten Kühlkreis 13 an den Heizkreis 14. Die Antriebswärme für die Wärmepumpe 3 wird mittels Heizkessel 5 bereitgestellt. Als Umweltwärmequelle für die Wärmepumpe 3 dienen ein Luftwärmetauscher 8 und/oder eine Erdsonden- oder Grundwasserbrunnen-Anlage. Diese sind über den gegenüber dem Kältebetrieb (siehe Fig. 2) umgeschalteten Kältekreislauf 12 mit der Kaltseite der Kältemaschine/Wärmepumpe 3 verbunden.

## Patentansprüche

1. Kombiniertes Kühl/Heiz-System mit
- einer Kältemaschine (3) mit einem Kaltbereich, der Nutzkälte auf einem unteren Temperaturniveau bereitstellt, und einem Abwärmebereich, der Abwärme auf einem mittleren Temperatumiveau abgibt,
- einem Latentwärmespeicher (1) zur Zwischenspeicherung der Abwärme aus der Kältemaschine (3) im Kühlbetrieb,
- einer Umgebungswärmetauschereinrichtung oder Rückkühleinrichtung (7, 8, 9, 10) zur Abgabe der Abwärme aus dem Latentwärmespeicher (1) und/oder dem Abwärmebereich der Kältemaschine (3) an die Umgebung im Kühlbetrieb,
- einer Heizwärmequelle (2, 5) zur Einspeisung von Wärme in den Latentwärmespeicher (1) im Heizbetrieb,
- wenigstens einer Einrichtung (4) zur Übertragung der Nutzkälte/Heizwärme auf einen Verbraucher, die mit dem Latentwärmespeicher (1) und dem Kaltbereich der Kältemaschine (3) verbindbar ist, und
- einer Steuereinrichtung zur Umschaltung zwischen Kühl- und Heizbetrieb,
wobei im Kühlbetrieb
einerseits der Kaltbereich der Kältemaschine (3) mit der wenigstens einen Einrichtung (4) zur Übertragung von Nutzkälte/Heizwärme an einen Verbraucher verbunden ist, um Nutzkälte bereitzustellen, und der Latentwärmespeicher (1) mit dem Abwärmebereich der Kältemaschine (3) verbunden ist, um Abwärme aus der Kältemaschine (3) in dem Latentwärmespeicher (1) zwischen zu speichern, und andererseits der Latentwärmespeicher (1) mit der Rückkühleinrichtung (7, 8, 9, 10) verbunden ist, um die im Latentwärmespeicher (1) zwischengespeicherte Abwärme über die Rückkühleinrichtung (7, 8, 9, 10) zeitversetzt an die Umgebung abzugeben,
und wobei im Heizbetrieb
über die Wärmequelle (2, 5) Heizwärme in den Latentwärmespeicher (1) eingespeichert wird und der Latentwärmespeicher (1) mit der Einrichtung (4) zur Übertragung von Nutzkälte/Heizwärme an einen Verbraucher verbunden ist, um die in dem Latentwärmespeicher (1) zwischengespeicherte Heizwärme an die wenigstens eine Einrichtung (4) zur Übertragung von Nutzkälte/Heizwärme an einen Verbraucher abzugeben.

2. System nach Anspruch 1, **dadurch gekennzeichnet, dass** die Heizwärmequelle (2, 5) im Heizbetrieb direkt mit der wenigstens einen Einrichtung (4) zur Übertragung von Nutzkälte/Heizwärme an einen Verbraucher verbindbar ist.

3. System nach einem der vorhergehenden Ansprüche, **dadurch gekennzeichnet, dass** die Heizwärmequelle (2, 5) eine Solarkollektoranlage (2) und/oder einen Heizkessel (5) und/oder eine Kraft/Wärme-Kopplungseinrichtung und/oder eine Kältemaschine/Wärmepumpe (3) umfaßt.

4. System nach einem der vorhergehenden Ansprüche, **dadurch gekennzeichnet, dass** die Kältemaschine (3) eine Sorptionskältemaschine ist.

5. System nach einem der vorhergehenden Ansprüche, **dadurch gekennzeichnet, dass** die Kältemaschine (3) zumindest teilweise mittels Wärme von der Heizwärmequelle (2, 5) angetrieben wird.

6. System nach einem der vorhergehenden Ansprüche 4 bis 5, **dadurch gekennzeichnet, dass** die Sorptionskältemaschine (3) zweistufig ausgeführt ist und eine obere und eine untere Kreislaufstufe umfasst,
dass eine fossile Wärmequelle zum Antrieb der oberen Kreislaufstufe vorgesehen ist, und
dass die untere Kreislaufstufe mit Heißwasser aus der Heizwärmequelle (2, 5) beheizt wird.

7. System nach einem der vorhergehenden Ansprüche, **dadurch gekennzeichnet, dass** im Kühlbetrieb die Umgebungswärmetauschereinrichtung (7, 8, 9,10) mit dem Latentwärmespeicher (1) und dem Abwärmebereich der Kältemaschine (3) verbunden ist.

8. System nach Anspruch 7, **dadurch gekennzeichnet, dass** die von der Umgebungswärmetauschereinrichtung (7, 8, 9, 10) pro Zeiteinheit an die Umgebung abgebbare Wärme größer ist als die im Abwärmebereich der Kältemaschine (3) pro Zeiteinheit anfallende Wärme, so dass die im Latentwärmespeicher (1) zwischengespeicherte Wärmemenge sinkt.

9. System nach Anspruch 7, **dadurch gekennzeichnet, dass** die von der Umgebungswärmetauschereinrichtung (7, 8, 9, 10) pro Zeiteinheit an die Umgebung abgebbare Wärme kleiner ist als die im Abwärmebereich der Kältemaschine pro Zeiteinheit anfallende Wärme, so dass die im Latentwärmespeicher (1) zwischengespeicherte Wärmemenge größer wird.

10. System nach einem der vorhergehenden Ansprüche, **dadurch gekennzeichnet, dass** im Heizbetrieb die Kältemaschine (3) als Wärmepumpe geschaltet ist, wobei der Kaltbereich Umgebungswärme aufnimmt und der Abwärmebereich als Heizwärmequelle dient.

11. System nach Anspruch 10, **dadurch gekennzeichnet, dass** im Heizbetrieb die Umgebungswärmetauschereinrichtung (7, 8, 9, 10) mit dem Kaltbereich der Wärmepumpe (3) verbindbar ist, um Umgebungswärme für den Kaltbereich der Wärmepumpe (3) bereitzustellen.

12. System nach einem der vorhergehenden Ansprüche 10 bis 11, **dadurch gekennzeichnet, dass** der Antrieb der Wärmepumpe (3) mittels Heizkessel (5) erfolgt.

13. System nach einem der vorhergehenden Ansprüche 10 bis 11, **dadurch gekennzeichnet, dass** der Antrieb der Wärmepumpe (3) mittels Direktfeuerung erfolgt.

## Claims

1. A combined cooling/heating system having
- a cooling unit (3) having a cold area, which provides useful refrigeration to a low temperature level, and a lost heat area, which emits lost heat to a middle temperature level,
- a latent heat storage device (1) for temporary storage of the lost heat from the cooling unit (3) in cooling mode,
- an ambient heat exchanger device or re-cooling facility (7, 8, 9, 10) for emitting the lost heat from the latent heat storage device (1) and/or from the lost heat area of the cooling unit (3) to the surroundings in cooling mode,
- a thermal heat source (2, 5) for feeding heat into the latent heat storage device (1) in heating mode,
- at least one device (4) for transferring the useful refrigeration/thermal heat to a load that can be connected to the latent heat storage device (1) and the cold area of the cooling unit (3), and
- a control device for switching between cooling and heating mode,
wherein, in cooling mode,
on the one hand the cold area of the cooling unit (3) is connected to the at least one device (4) for transferring useful refrigeration/thermal heat to a load in order to provide useful refrigeration, and the latent heat storage device (1) is connected to the lost heat area of the cooling unit (3) in order to store lost heat from the cooling unit (3) temporarily in the latent heat storage device (1), and on the other hand the latent heat storage device (1) is connected to the re-cooling facility (7, 8, 9, 10) in order to emit the lost heat temporarily stored in the latent heat storage device (1) via the re-cooling facility (7, 8, 9, 10) to the surroundings with a time delay,
and wherein, in heating mode,
via the heat source (2, 5) thermal heat is fed in and stored in the latent heat storage device (1) and the latent heat storage device (1) is connected to the device (4) for transferring useful refrigeration/thermal heat to a load in order to emit the thermal heat stored temporarily in the latent heat storage device (1) to the at least one device (4) for transferring useful refrigeration/thermal heat to a load.

2. A system according to claim 1, **characterised in that** the thermal heat source (2, 5) can be connected in heating mode directly to the at least one device (4) for transferring useful refrigeration/thermal heat to a load.

3. A system according to any one of the preceding claims, **characterised in that** the thermal heat source (2, 5) comprises a solar collector system (2) and/or a boiler (5) and/or a combined heat and power facility and/or a cooling unit/heat pump (3).

4. A system according to any one of the preceding claims, **characterised in that** the cooling unit (3) is a sorption cooling unit.

5. A system according to any one of the preceding claims, **characterised in that** the cooling unit (3) is driven at least partly by means of heat from the thermal heat source (2,5).

6. A system according to any one of the preceding claims 4 and 5, **characterised in that** the sorption cooling unit (3) is of two-stage construction and comprises an upper and a lower circulation stage,
**in that** a fossil heat source is provided to drive the upper circulation stage, and
**in that** the lower circulation stage is heated by means of hot water from the thermal heat source (2, 5).

7. A system according to any one of the preceding claims, **characterised in that** in cooling mode the ambient heat exchanger device (7, 8, 9, 10) is connected to the latent heat storage device (1) and to the lost heat area of the cooling unit (3).

8. A system according to claim 7, **characterised in that** the heat that can be emitted per unit of time from the ambient heat exchanger device (7, 8, 9, 10) to the surroundings is greater than the heat accumulating per unit of time in the lost heat area of the cooling unit (3), so that the amount of heat stored temporarily in the latent heat storage device (1) decreases.

9. A system according to claim 7, **characterised in that** the heat that can be emitted per unit of time from the ambient heat exchanger device (7, 8, 9, 10) to the surroundings is less than the heat accumulating per unit of time in the lost heat area of the cooling unit, so that the amount of heat stored temporarily in the latent heat storage device (1) increases.

10. A system according to any one of the preceding claims, **characterised in that** in heating mode the cooling unit (3) is connected as a heat pump, wherein the cold area takes up ambient heat and the lost heat area is used a thermal heat source.

11. A system according to claim 10, **characterised in that** in heating mode the ambient heat exchanger device (7, 8, 9, 10) can be connected to the cold area of the heat pump (3) in order to provide ambient heat for the cold area of the heat pump (3).

12. A system according to any one of the preceding claims 10 to 11, **characterised in that** the heat pump (3) is driven by means of a boiler (5).

13. A system according to any one of the preceding claims 10 to 11, **characterised in that** the heat pump (3) is driven by means of direct heating.

## Revendications

1. Système de refroidissement/chauffage combiné, comprenant :
- une machine de refroidissement (3) comportant une zone froide qui fournit du froid utile à un niveau de température inférieur, et une zone de chaleur perdue qui émet de la chaleur perdue à un niveau de température moyen,
- un accumulateur de chaleur latente (1) pour le stockage intermédiaire de la chaleur perdue émise par la machine de refroidissement (3) en fonctionnement refroidissement,
- un dispositif échangeur de chaleur ambiante ou dispositif de refroidissement de retour (7, 8, 9, 10) pour libérer dans l'environnement la chaleur perdue de l'accumulateur de chaleur latente (1) et/ou de la zone de chaleur perdue de la machine de refroidissement (3) en fonctionnement refroidissement,
- une source de chaleur de chauffage (2, 5) pour emmagasiner de la chaleur dans l'accumulateur de chaleur latente (1) en fonctionnement chauffage,
- au moins un dispositif (4) pour transmission du froid utile/chaleur de chauffage à un consommateur, dispositif qui peut être relié à l'accumulateur de chaleur latente (1) et à la zone froide de la machine de refroidissement (3), et
- un dispositif de commande pour commutation entre le fonctionnement refroidissement et le fonctionnement chauffage,
dans lequel, en fonctionnement refroidissement,
d'une part la zone froide de la machine de refroidissement (3) est reliée audit au moins un dispositif (4) de transmission de froid utile/chaleur de chauffage à un consommateur, pour fournir du froid utile, et l'accumulateur de chaleur latente (1) est relié à la zone de chaleur perdue de la machine de refroidissement (3) pour le stockage intermédiaire dans l'accumulateur de chaleur latente (1) de la chaleur perdue émise par la machine de refroidissement (3), et d'autre part l'accumulateur de chaleur latente (1) est relié au dispositif de refroidissement de retour (7, 8, 9, 10) pour libérer dans l'environnement, de manière décalée dans le temps, via le dispositif de refroidissement de retour (7, 8, 9, 10), la chaleur perdue stockée de manière intermédiaire dans l'accumulateur de chaleur latente (1),
et dans lequel, en fonctionnement chauffage,
par l'intermédiaire de la source de chaleur (2, 5), de la chaleur de chauffage est emmagasinée dans l'accumulateur de chaleur latente (1) et l'accumulateur de chaleur latente (1) est relié au dispositif (4) de transmission de froid utile/chaleur de chauffage à un consommateur pour transférer la chaleur de chauffage stockée de façon intermédiaire dans l'accumulateur de chaleur latente (1) audit au moins un dispositif (4) de transmission de froid utile/chaleur de chauffage à un consommateur.

2. Système selon la revendication 1, **caractérisé en ce que** la source de chaleur de chauffage (2, 5) peut être reliée, en fonctionnement chauffage, directement audit au moins un dispositif (4) de transmission de froid utile/chaleur de chauffage à un consommateur.

3. Système selon l'une des revendications précédentes, **caractérisé en ce que** la source de chaleur de chauffage (2, 5) comprend un dispositif collecteur solaire (2) et/ou une chaudière de chauffage (5) et/ou un dispositif de cogénération d'énergie/de chaleur et/ou une machine de refroidissement/pompe à chaleur (3).

4. Système selon l'une des revendications précédentes, **caractérisé en ce que** la machine de refroidissement (3) est une machine de refroidissement à absorption (3).

5. Système selon l'une des revendications précédentes, **caractérisé en ce que** la machine de refroidissement (3) est entraînée au moins partiellement via la chaleur provenant de la source de chaleur de chauffage (2, 5).

6. Système selon l'une des revendications précédentes 4 à 5, **caractérisé en ce que** la machine de refroidissement à absorption (3) est conçue à deux étages et comprend un étage de circuit supérieur et un étage de circuit inférieur,
**en ce qu'**est prévue une source de chaleur fossile pour l'entraînement de l'étage de circuit supérieur, et
**en ce que** l'étage de circuit inférieur est chauffé avec de l'eau chaude provenant de la source de chaleur de chauffage (2, 5).

7. Système selon l'une des revendications précédentes, **caractérisé en ce qu'**en fonctionnement refroidissement, le dispositif échangeur de chaleur ambiante (7, 8, 9, 10) est relié à l'accumulateur de chaleur latente (1) et à la zone de chaleur perdue de la machine de refroidissement (3).

8. Système selon la revendication 7, **caractérisé en ce que** la quantité de chaleur pouvant être libérée dans l'environnement par unité de temps par le dispositif échangeur de chaleur ambiante (7, 8, 9, 10) est plus importante que la quantité de chaleur générée par unité de temps dans la zone de chaleur perdue de la machine de refroidissement (3) de sorte que la quantité de chaleur stockée de façon intermédiaire dans l'accumulateur de chaleur latente (1) diminue.

9. Système selon la revendication 7, **caractérisé en ce que** la quantité de chaleur pouvant être libérée dans l'environnement par unité de temps par le dispositif échangeur de chaleur ambiante (7, 8, 9, 10) est moins importante que la quantité de chaleur générée par unité de temps dans la zone de chaleur perdue de la machine de refroidissement (3) de sorte que la quantité de chaleur stockée de façon intermédiaire dans l'accumulateur de chaleur latente (1) augmente.

10. Système selon l'une des revendications précédentes, **caractérisé en ce qu'**en fonctionnement chauffage, la machine de refroidissement (3) est commutée en tant que pompe à chaleur, la zone froide absorbant de la chaleur ambiante et la zone de chaleur perdue servant de source de chaleur de chauffage.

11. Système selon la revendication 10, **caractérisé en ce qu'**en fonctionnement chauffage, le dispositif échangeur de chaleur ambiante (7, 8, 9, 10) peut être relié à la zone froide de la pompe à chaleur (3) pour fournir de la chaleur ambiante à la zone froide de la pompe à chaleur (3).

12. Système selon l'une des revendications précédentes 10 à 11, **caractérisé en ce que** l'entraînement de la pompe à chaleur (3) est réalisé via la chaudière de chauffage (5).

13. Système selon l'une des revendications précédentes 10 à 11, **caractérisé en ce que** l'entraînement de la pompe à chaleur (3) s'effectue par chauffage direct.
